# EUROPEAN PATENT APPLICATION

(11) **EP 4 751 554 A1**
(43) Date of publication of application: **03.06.2026**
(21) Application number: 25218997.2
(22) Date of filing: 27.11.2025
(51) Int. Cl.: A01G 3/047, A01G 3/053, B25F 5/02

(54) **BATTERY OPERATED CUTTING DEVICE WITH SWIVELLING HANDLE TECHNICAL FIELD**

(30) Priority: 27.11.2024 EP 24215817
(71) Applicant: Husqvarna AB, 561 82 Huskvarna (SE)
(72) Inventor: Haas, Laura, 87789 Woringen (DE)
(74) Representative: Finkele, Rolf

(57) **Abstract**

A cutting tool **(100)** includes a housing **(102)** defining a front surface **(104)** and a rear surface **(106),** with a motor disposed within the housing **(102).** The cutting tool **(100)** further includes a cutting implement **(110)** extending from the housing **(102)** away from the front surface **(104)** with the cutting implement's dimensions defining a cutting plane **(112).** Further, a handle assembly **(114)** is coupled to the housing **(102)** towards the rear surface **(106),** wherein the coupling defines a fixed swivel point **(P)** that allows the handle assembly **(114)** to swivel about the rear surface **(106)** of the housing **(102)** along a swivel axis **(120)** that runs through it and that is orthogonal to a swivel plane **(108)** that comprises the swivel point **(P).** The cutting tool **(100)** is characterized in that the swivel plane **(108)** is backwardly inclined to the cutting plane **(112)** by an inclination angle **(125)** that is in a range of 30 to 60 degrees, preferably 35 to 45 degrees, and more preferably 40 degrees.

## Description

### TECHNICAL FIELD

The present disclosure relates to a cutting tool, particularly a modular cutting tool with a swiveling handle assembly.

### BACKGROUND

Cutting tools may be used to perform several different tasks both indoor and outdoor. The cutting tools may include a motor and a rechargeable battery for performing different tasks. The rechargeable battery powers the motor which in turn rotates a cutting implement for performing different tasks. The different tasks may include, but may not be limited to, trimming branches, trimming hedges, and edging. The cutting tools may be designed and manufactured to perform one or just a few of the abovementioned tasks. However, interchangeable handheld power tools may allow users to use different cutting attachments, in which each attachment may be configured to perform a particular task. The cutting attachments of the power tools may include a hedge trimmer attachment, a chainsaw attachment, a pruner attachment, etc.

A cutting tool such as a hedge trimmer may include a housing with a power source and a motor. The motor may power a cutting blade for trimming hedges. The hedge trimmer may allow swiveling of the cutting blade with the housing and the motor with respect to a handle section of the hedge trimmer. The swiveling of the handle section may change a holding position of the hedge trimmer and may keep the cutting blade, the housing, and the handle section in a same plane. An angle between the cutting blade and the holding position before and after swiveling may remain same.

An example is provided by PCT patent application WO 2008/097579 A1 (hereinafter referred to as '579 reference). The '579 reference discloses an extendable hedge trimmer which includes a housing having a handle end and a cutting implement attached to it. The housing includes the motor to drive a cutting implement, in particular hedge trimmer blades, attached to the housing at its front surface. At the rear surface of the housing a handle is removably attached to it.

Another example is provided by Chinese Utility Model CN 209,007,490 U (hereinafter referred to as '490 reference). The '490 reference discloses a handheld power tool, particularly a small angle grinder, comprising a shell with a head shell housing a motor and a handle shell arranged at an angle to the head shell. The handle shell features a battery pack mounting part at its far end from the head shell, and a battery pack in elongated shape is removably coupled to this mounting part. The motor outputs rotational power via a motor shaft, which is directly driven by the motor and connected to a main shaft that extends out of the head shell for attachment of a working head. The handle includes a holding part with a longitudinal axis, which is arranged at an angle to the bottom plane of the battery pack, with the longitudinal axis perpendicular to the different surface of the motor shaft.

Another example is provided by Chinese Utility Model CN 220,296,985 U (hereinafter referred to as '985 reference). The '985 reference discloses a handle structure for electric power tools, comprising a front handle shell, a rear handle shell, and a rotating structure that connects the two shells. Both shells are straight cylindrical, with one end face serving as a first connecting face on the front shell and a second connecting face on the rear shell, parallel to the first. The rotating structure is mounted on these faces, enabling the shells to rotate relative to each other within an angle of 0-90 degrees. The rotating structure includes a first rotating member on the front shell and a second on the rear shell, rotatably coupled. A rotation limiting structure is provided to restrict rotation, involving an operation key, clamping grooves, and clamping plates, allowing for secure locking at desired angles. The first rotating member features an annular groove, and the second includes a rotating ring that engages with this groove. The handle structure is applicable to power screwdrivers, with the front shell housing the screwdriver and driving components, and the rear shell containing the power module.

Another example is provided by European Patent EP 2,624,680 B1 (hereinafter referred to as '680 reference). The '680 reference discloses a motor-driven garden cutting device, such as hedge trimmers or shears. The device comprises a handle that can be displaced between at least two operating positions about a pivot axis. The handle is designed for one-handed operation and can face towards or away from the blade arrangement, with the positions offset by 180°. The device comprises a blade arrangement with oscillating blades that define a cutting plane, driven by an electric motor housed in a motor housing. The displacement of the axis about a pivot axis, which is inclined at an angle of at least 3° to 20° relative to the surface normal of the cutting plane, allows ergonomic handling and improved manoeuvrability. The handle can be locked in each position. The device may also comprise a handle part extending between the handle and the blade arrangement, and the handle may house an accumulator as a power source.

Another example is provided by United States patent application US 2018/0 139907 A1 (hereinafter referred to as '907 reference). The '907 reference discloses a hedge trimmer comprising a trimming blade driven by a transmission mechanism powered by an electric motor and a battery pack, all mounted within a two-part housing assembly that carries a first handle and a second handle. The first housing and the second housing are rotatably connected by respective rotation connection parts, allowing the assembly containing the motor, transmission mechanism, and first handle to rotate relative to the assembly containing the battery pack and second handle about an inclined rotation axis S2. A plane perpendicular to this rotation axis and a plane perpendicular to the longitudinal axis of the blade intersect obliquely, defining an intersection angle of about 15° (optionally 10°-45°).

Another example is provided by European Patent EP 1,844,646 B2 (hereinafter referred to as '646 reference). The '646 reference discloses an electric hedge trimmer comprising a housing with a cutter bar projecting along a longitudinal axis. The trimmer is driven by an electric motor powered by an interchangeable electric energy store. The trimmer includes a top handle positioned above the centre of gravity and a rear handle behind it. The rear handle is pivotable or rotatable about transverse axes, with handle axes aligned within -30° to +30° relative to the longitudinal axis.

### SUMMARY OF THE INVENTION

In view of the above, it is an objective of the present invention to solve or at least reduce the drawbacks discussed above. The objective is at least partially achieved by a cutting tool.

According to an aspect of the present invention, the cutting tool includes a housing defining a front surface and a rear surface, with a motor disposed within the housing. The cutting tool further includes a cutting implement extending from
the housing away from the front surface with the cutting implement's cutting properties defining a cutting plane. Further, a handle assembly is coupled to the housing towards the rear surface. The handle assembly includes a shaft. A battery holder is coupled to and extends from the shaft opposite to the housing, wherein the battery holder is adapted to house a battery. A coupling between the housing and the handle assembly defines a fixed swivel point that allows the handle assembly to swivel about the rear surface of the housing along a swivel axis. This swivel axis runs through the handle assembly and is orthogonal to a swivel plane that comprises the swivel point, resulting in a plurality of end positions for the handle assembly. The swivel plane is inclined to the cutting plane by an inclination angle that is in a range of 30 to 60 degrees, preferably 35 to 45 degrees, and more preferably 40 degrees, wherein the swivel plane extends from the cutting plane in a rearward direction toward the rear surface of the housing. The cutting tool is characterized in that the plurality of end positions includes a parking position, wherein the parking position is an end position in which the cutting tool is configured to be placed on a surface in a stable, upright configuration on the battery holder, and in the parking position, a centre of gravity of the cutting tool lies within a contact area of the battery holder.

With this advantageous backwardly inclined inclination angle between swivel plane and cutting plane the cutting tool, in particular a hedge trimmer, is suitable for use for different kinds of specific purposes. The cutting tool provides better ergonomics to a user while holding the handle assembly. The cutting tool may present different cutting angles after the rotation of the handle assembly about the handle axis. The different cutting angles may help the user to work efficiently and without getting tired. The different cutting angles may further help the user to reach odd places on a cutting surface such as hedge, bushes, trees, etc. The cutting tool may further be attached to a long handle for increasing the reach of the cutting tool. The long handle may include telescopic tilt options which in combination with the rotation of the handle assembly of the cutting tool increase a possibility of reaching difficult places. The long handle may be electrically connected to the cutting tool and may include a power button for operating the cutting tool.

The battery holder provides a place to house the battery. As the battery may need to be changed periodically, the battery holder is provided at such a position that a user may easily change the battery without needing to tackle any internal components.

Further, the cutting tool provides with such a structure that with each swivel motion, the cutting tool presents a new end position for a user to work with. Such a design of the handle assembly allows a wide range of users to effectively and efficiently grip the cutting tool, and thereafter use the same in a wide variety of applications.

According to an exemplary embodiment of the invention, the plurality of end positions includes a working position. One of the end positions is defined as a working position. Although, each of the end positions may be called up as a working position and a user may perform some tasks in any position, however, a conventional working configuration is presented as a working position.

The parking position refers to such an end position that the cutting tool may be placed on a ground or any other resting surface in a stable configuration. Parking position allows a user to stably place the cutting tool on the ground surface between cutting operations. Such an arrangement helps the cutting tool to achieve the required stability to be placed in a parking position.

According to an exemplary embodiment of the invention, the battery may be a rechargeable battery and may be electrically connected to the motor present in the housing of the cutting tool. The electrical connection between the battery and the motor may power the cutting tool.

According to an exemplary embodiment of the invention, the motor is electrically connected to a wall outlet via an electrical wire and an electrical plug. The electrical wire may come out of the handle assembly and may roll back in the handle housing of the cutting tool. The electrical connection between the motor and the wall outlet may power the cutting tool.

According to a further exemplary embodiment of the invention the axis along the shaft of the handle assembly is inclined by an angle from the swivel axis. By this inclination a further optimization of the positioning of the handle assembly when swiveling it along the rear side of the housing can be achieved.

Before discussing the invention with the help of the drawings, the invention will be briefly discussed in general. Already known version of cutting tools are not optimal for shape cutting or overhead work, because the handle only rotates by one degree of freedom. It would be desirable to swivel by several degrees of freedom. The selected angular arrangement of the present cutting tool is designed in such a way that, in combination with both the arrangement of the battery and the stem extension, an advantageous constellation results in the working position as well as in the parking position.

The present cutting tool offers advantages such as better ergonomics, less tiring work, processing of exposed positions above the upper body, and form-cutting work etc. In combination with an optimal battery arrangement, there is a possibility for space saving storage as well. At the same time, there is a corresponding stability for parking.

A rotatable handle unit, with an axis of rotation arranged at an angle to the imaginary knife axis, which results in an approximately horizontal and an approximately vertical end position of the handle is provided. The selected angle arrangement is designed in such a way that at least in one end position of the handle, the center of gravity of the cutter is within the contact area of the battery.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a side perspective view of a cutting tool in accordance with an exemplary embodiment of the present disclosure;
**FIG. 2** illustrates a perspective view of a cutting tool with two intersecting planes in accordance with an exemplary embodiment of the present disclosure;
**FIG. 3** illustrates a perspective view of a cutting tool with two intersecting planes in accordance with an exemplary embodiment of the present disclosure;
**FIG. 4A** illustrates a perspective view of a cutting tool in a parked position in accordance with an exemplary embodiment of the present disclosure;
**FIG. 4B** illustrates a side view of a cutting tool in a parked position in accordance with an exemplary embodiment of the present disclosure; and
**FIG. 5** illustrates a plurality of working positions of a cutting tool in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

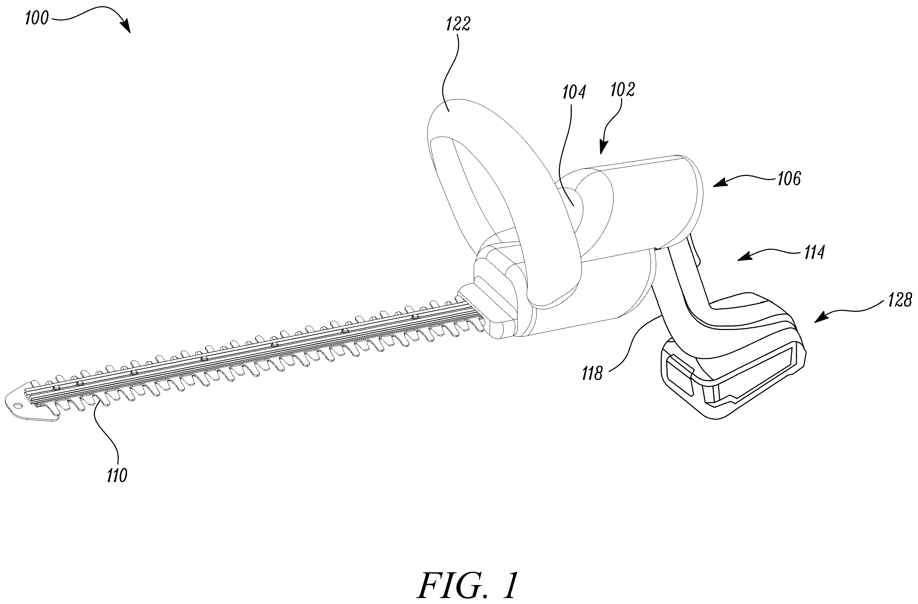

**FIG. 1** illustrates a side perspective view of a cutting tool **100.** The cutting **tool 100** includes a housing **102** with a front surface **104** and a rear surface **106.**

The cutting tool **100** further includes a front handle assembly **122** and a handle assembly **114.** The front handle assembly **122** is coupled to the housing **102** towards the front surface **104.** The cutting tool **100** further includes a cutting implement **110** extending from the housing **102** away from the front surface **104.**

The handle assembly **114** is coupled to the housing **102** towards the rear surface **106.** The handle assembly **114** includes a shaft **118** extending from the rear surface **106.** The cutting tool **100** further includes a battery holder **128** coupled to the shaft **118** of the handle assembly **114.** Moreover, the battery holder **128** extends from the shaft **118.** The battery holder **128** is adapted to house a battery (not shown) for providing electrical power to the cutting tool**100.**

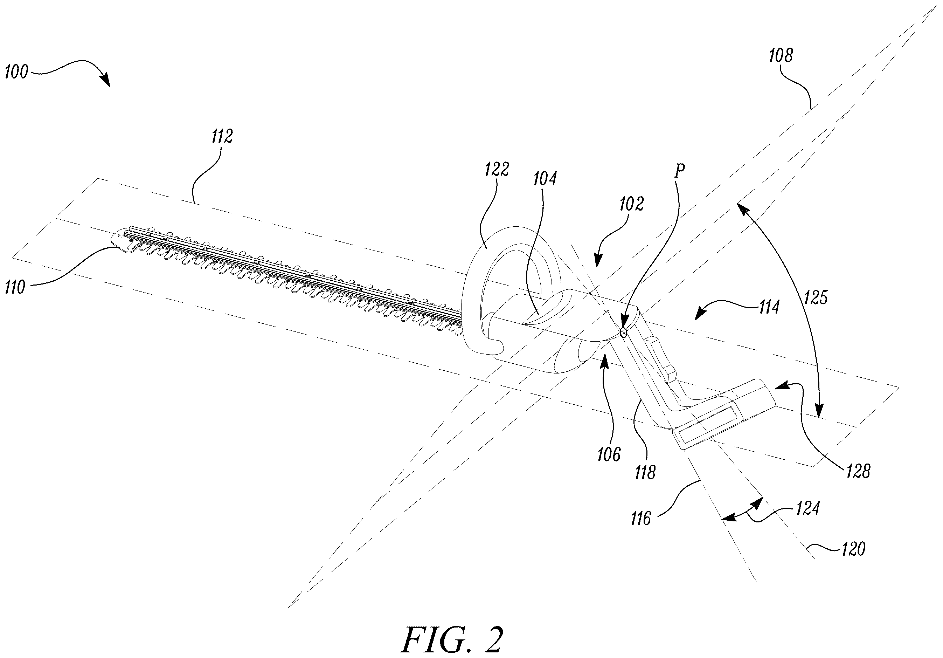

**FIG. 2** illustrates a perspective view of the cutting **tool 100** with two intersecting planes. The cutting tool **100** includes the housing **102** with the front surface **104** and the rear surface **106.** The cutting tool **100** further includes the handle assembly **114,** which is coupled to the housing **102** towards the rear surface **106** such that the coupling defines a fixed swivel point **"P"** that allows the handle assembly **114** to swivel about the rear surface **106** of the housing **102.**

Further, the cutting tool **100** includes the cutting implement **110** extending from the housing **102** away from the front surface **104** with the cutting implement's dimensions defining a cutting plane **112.** The cutting implement **110** of the cutting tool **100** is adapted to move within the cutting plane **112.** Further, the rear surface **106** of the cutting tool **100** defines a swivel plane **108** such that a majority of the rear surface **104** lies within the swivel plane **108.** The swivel plane **108** and the cutting plane **112** intersect each other and define an angular orientation therein. Further, the swivel plane **108** is backwardly inclined to the cutting plane **112** by an inclination angle **125** that is in a range of **30** to **60** degrees, preferably **35** to **45** degrees, and more preferably **40** degrees.

The shaft **118** of the handle assembly **114** is adapted to swivel about a swivel axis **120.** In other words, the handle assembly **114** swivels about the rear surface **106** of the housing **102** along the swivel axis **120** that runs through it and that is orthogonal to the swivel plane **108** that comprises the swivel point **P.** In other words, the swivel axis **120** is orthogonal to the swivel plane **108.** However, the handle axis **116** defined by the handle assembly **114** and illustrated in this figure is not orthogonal to the swivel plane **108.** The swiveling movement of the handle assembly **114** about the swivel axis **120** results in a plurality of end position for the handle assembly **114.** An end position of the handle assembly **114** illustrated in this figure is a working position. The swivel axis **120** and the handle axis **120** are angularly oriented to each other to form an angle **124.**

The angle **124** generally lies within a range of about 5 to 45 degrees. Preferably, the angle **124** is in a range of 10-20 degrees. More precisely, the angle **124** is 15 degrees.

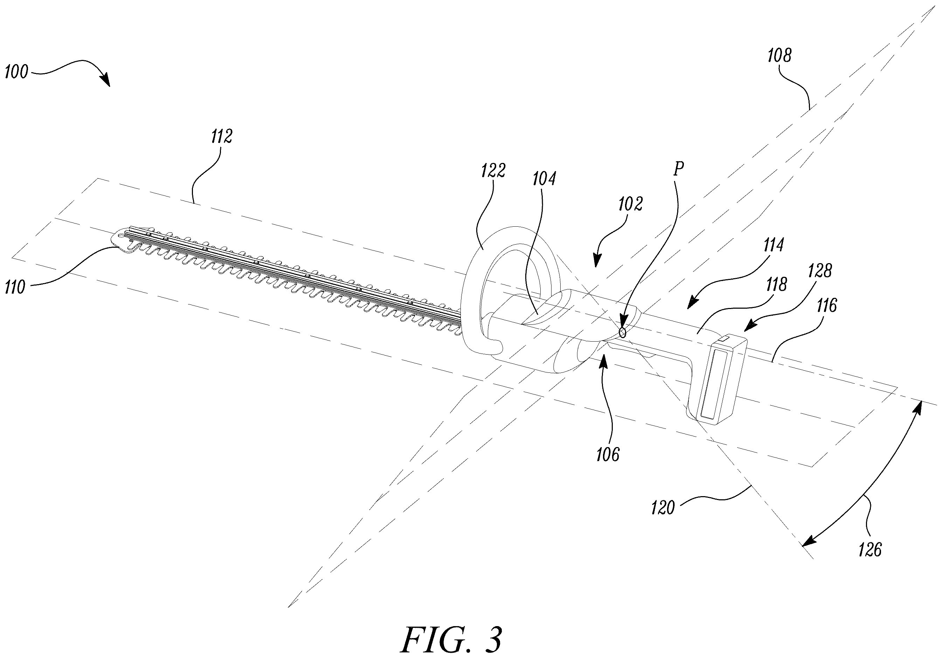

**FIG. 3** illustrates a perspective view of the cutting tool **100** with two intersecting planes as well. The shaft **118** of the handle assembly **114** is adapted to swivel about the swivel axis **120** such that the swivel axis **120** is orthogonal to the swivel plane **108.** However, the handle axis **116** illustrated in this figure is not orthogonal to the swivel plane **108** as well. An end position of the handle assembly **114** illustrated in this figure is a working position as well. The handle axis **116** and the swivel axis **120** of the cutting **tool 100** are angularly oriented to form an angle **126.** The angle **126** generally lies within 5 to 45 degrees. Preferably, the angle **126** is in a range of 30 to 45 degrees and more precisely the angle **126** is 35 degrees. The angle **126** is illustrated similar to the angle **124.**

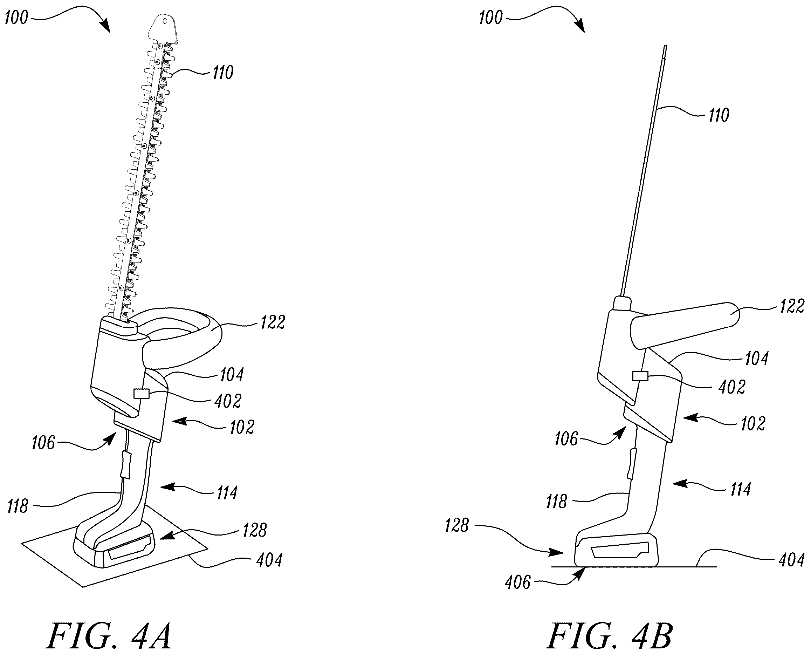

**FIG. 4A** illustrates a perspective view of the cutting tool **100** in a parking position. The cutting tool **100** is parked upright on a parking station **404.** The parking station **404** is a plate for supporting the cutting tool **100** to stand upright in the parking position. In the parking position, the battery housing **128** is in direct contact with the parking station **404.** A center of gravity **402** of the cutting tool **100** is illustrated in the parking position. The center of gravity **402** lies within a contact area of the handle assembly **114** and the housing **102** of the cutting tool **100** in at least one of the working position or the parking position. The handle assembly **114** is configured to rotate between the plurality of end positions. The working position and the parking position comprise one of the plurality of end positions.

**FIG. 4B** illustrates a side view of the cutting tool **100** in the parking position. The cutting tool **100** includes a contact area **406** under the handle assembly **114** and opposite to the rear surface **106** of the housing **102.** The contact area **406** is a bottom part of the battery housing **128** and remains in contact with the parking station **404** all the time while the cutting tool **100** is in the parking position.

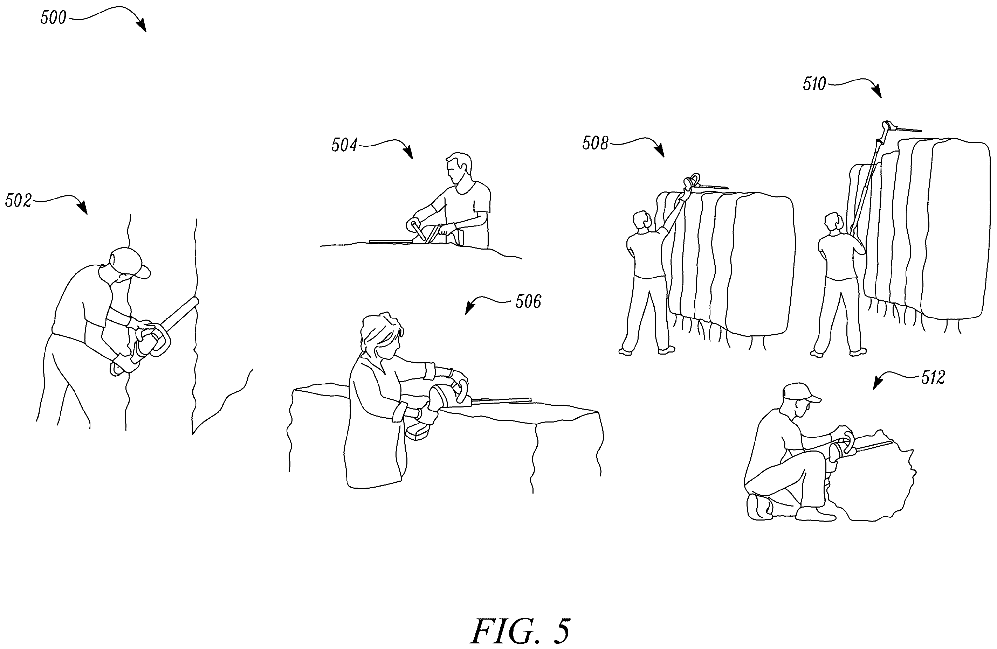

**FIG. 5** illustrates a plurality of working configurations **500** of the cutting tool **100.** The cutting tool **100** is in the working position in all the plurality of working configurations **500.** The plurality of working configurations **500** includes a first working configuration **502,** a second working configurations **504,** a third working configuration **506,** a fourth working configuration **508,** a fifth working configurations **510,** and a sixth working configuration **512.** In the plurality of working configurations **500,** a user is holding the cutting tool **100** with both arms and the cutting **tool 100** is in one of the end positions from the plurality of the end positions suitable for this job. The user chooses an ergonomic end position for cutting/trimming by swiveling the handle assembly **114** about the swivel axis **120.**

In the first working configuration **502,** a user is trimming a side portion of a hedge with the cutting tool **100**. In the second working configuration **504,** a user is trimming a top position of a small hedge with the cutting tool **100.** In the third working configuration **506,** a user is trimming a top portion of a normal sized hedge. In the fourth working configuration **508,** a user is trimming a top portion of a slightly taller hedge. In the fifth working configuration **510,** a user is trimming a top portion of a large hedge with the help of a long handle attached to the cutting **tool 100.** In the sixth working configuration **512,** a user is trimming a small bush.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Cutting Tool
- **102**: Housing
- **104**: Front Surface
- **106**: Rear Surface
- **108**: Swivel Plane
- **110**: Cutting Implement
- **112**: Cutting Plane
- **114**: Handle Assembly
- **116**: Handle Axis
- **118**: Smaller Angle
- **120**: Swivel Axis
- **122**: Front Handle Assembly
- **124**: Angle
- **125**: Inclination Angle
- **126**: Angle
- **128**: Battery Housing
- **402**: Center of Gravity
- **404**: Parking Station
- **406**: Contact Area
- **500**: Plurality of Working Configurations
- **502**: First Working Configuration
- **504**: Second Working Configuration
- **506**: Third Working Configuration
- **508**: Fourth Working Configuration
- **510**: Fifth Working Configuration
- **512**: Sixth Working Configuration
- **P**: Swivel Point

## Claims

1. A cutting tool **(100)** comprising:
a housing **(102)** defining a front surface **(104)** and a rear surface **(106);**
a motor disposed within the housing **(102);**
a cutting implement **(110)** extending from the housing **(102)away** from the front surface **(104)** with the cutting implement's cutting properties defining a cutting plane **(112);**
a handle assembly **(114)** coupled to the housing **(102)** towards the rear surface **(106),** the handle assembly **(114)** including a shaft **(118);**
a battery holder **(128)** coupled to and extending from the shaft **(118)** opposite to the housing **(102),** wherein the battery holder **(128)** is adapted to house a battery;
wherein a coupling between the housing **(102)** and the handle assembly **(114)** defines a fixed swivel point **(P)** that allows the handle assembly **(114)** to swivel about the rear surface **(106)** of the housing **(102)** along a swivel axis **(120)** that runs through it and that is orthogonal to a swivel plane **(108)** that comprises the swivel point **(P),** resulting in a plurality of end positions for the handle assembly **(114);** and
wherein the swivel plane **(108)** is inclined to the cutting plane **(112)** by an inclination angle **(125)** that is in a range of 30 to 60 degrees, preferably 35 to 45 degrees, and more preferably 40 degrees, wherein the swivel plane **(108)** extends from the cutting plane **(112)** in a rearward direction toward the rear surface **(106)** of the housing **(102);**
**characterized in that:**
the plurality of end positions includes a parking position, wherein the parking position is an end position in which the cutting tool **(100)** is configured to be placed on a surface in a stable, upright configuration on the battery holder **(128);** and
in the parking position, a center of gravity **(402)** of the cutting tool **(100)** lies within a contact area **(406)** of the battery holder **(128).**

2. The cutting tool **(100)** of claim 1, wherein the plurality of end positions includes a working position.

3. The cutting tool **(100)** of any one of the preceding claims, wherein the axis **(116)** of the shaft **(118)** of the handle assembly **(114)** is inclined by an angle **(124)** from the swivel axis **(120).**
